# EUROPEAN PATENT APPLICATION

(11) **EP 3 295 894 A1**
(43) Date of publication of application: **21.03.2018**
(21) Application number: 17192231.3
(22) Date of filing: 20.09.2017
(51) Int. Cl.: A61C 13/00, A61C 9/00, A61C 13/34, A61C 13/107

(54) **IMPROVED METHOD FOR CAPTURING PATIENT INFORMATION TO PRODUCE DIGITAL MODELS AND FABRICATE CUSTOM PROSTHETICS**

(30) Priority: 20.09.2016 US 201662397328 P; 05.08.2017 US 201762541693 P
(71) Applicant: Wagner, Stephen, A., Albuquerque, NM 87102 (US); Goodacre, Charlie, Redlands, CA 92372 (US); Thompson, Brent, Scottsdale, AZ 85260 (US); Goodacre, Brian, Loma Linda, CA 92354 (US)
(72) Inventor: Wagner, Stephen, A., Albuquerque, NM 87102 (US); Goodacre, Charlie, Redlands, CA 92372 (US); Thompson, Brent, Scottsdale, AZ 85260 (US); Goodacre, Brian, Loma Linda, CA 92354 (US)
(74) Representative: V.O.

(57) **Abstract**

A method for producing a customized, digitally-designed prosthesis in three patient interactions: a first patient interaction including acquiring a patient's intra-oral anatomy, natural anatomical measurements of the patient, and the tooth data of the patient for producing a first data set to design a first digital prosthesis, the first digital prosthesis being manufactured into a first denture base; a second patient interaction including seating the first denture base in the patient, adjusting the positioning of the teeth in the first denture base, and making an interocclusal record with the first denture base for creating a second data set to create a final digital denture, the final digital prosthesis being manufactured into a final prosthesis; and a third interaction where the dental practitioner seats the final prosthesis in the mouth of the patient.

## Description

### Related Applications

This application claims priority from US Provisional Application No. 62/397,328 filed on September 20, 2016 and entitled "Improved Method for Capturing Patient Information to Produce Digital Models and Fabricate Custom Prosthetics" and US Provisional Application No. 62/541,693 filed on August 5, 2017 and entitled "Method for Capturing Patient Information to Produce Digital Models and Fabricate Custom Prosthetics", the entire contents of which are hereby fully incorporated herein.

### Invention

The present invention relates to fabricating customized dentures. The present invention even further relates to improved methods for taking measurements and capturing data of a dental patient's anatomical features to aid in building prosthetic teeth. The present invention even further relates to a comprehensive workflow that reduces the number of patient interactions yet delivers a fully-customized long-term dental prosthetic.

### Background of the Invention

In the field of aesthetic restorative dentistry, it is desirable to take pre-operative measurements and take high-quality, accurate impressions. In addition, intraoperative measurements are critical in assessing and predicting the aesthetic and functional outcome of the surgical procedure, as well as in the construction of the dental prosthesis. Specifically, the selection of denture teeth is generally understood to be improved when inputting certain dimensional measurements from the patient's anatomy.

One dimensional measurement addresses the positioning of the interdental papilla. Another measurement gauges the distance between the eyes. A third dimensional measurement is the width of the nose and specifically the interalar width. A fourth dimensional measurement helpful for selecting denture teeth is the relationship between the maxillary teeth and the mandibular anterior teeth, both for vertical and horizontal planes used to determining the optimal denture teeth. Other measurements may be found in reference guides known in the arts, such as that published by Panadent Corporation.

Such measurements are more prominent in analog construction of prosthetic tooth replacement. Digital scanning techniques have largely replaced utilizing anatomical measurements to create dental prosthesis, especially, for example, as digital designing of dentures is accomplished in software and milled out for use.

There exists a number of different techniques to manage the workflow of a patient seeking dental prosthetic treatments, either sui generis involving dental implantation, with tissue-based prosthetics or in a restorative manner that involves replacement prosthetics. See for example, US Pat. No 9,326,834, and US Pat No. 9,707,061 by Morales et al., using a strictly digital workflow to create denture devices. The Morales et al. patents, in efforts to reduce patient-dentist interaction time, generally teach acquiring digital patient data from scans taken in order to create functional fitting replica dentures. There are issues with technological shortcomings, data fidelity and with establishing reference points solely through digital data that prevent such an approach from fully balancing dentist's time and his or her expertise for achieving aesthetic objectives.

Managing the time that a patient should spend with a dental professional is one of fine balance, in assuring that the time is effectively spent to acquire all the necessary information to deliver a highly-customized, fully functional final prosthetic.

There exists a need for a method for acquiring patient information for delivering final prosthetics that involves less visits to the dental professional and less chairside time for both patient and dental professional. There is a further need to integrate selected natural patient measurements to a digital workflow to create a balance of digital dental efficiencies, such as creating digital dentures for manufacturing, that are connected to dentist-created aesthetic objectives. There is an even further need for delivering a prosthetic such as a denture within three patient interactions.

### Summary of the Invention

In accordance with various aspects of the present invention, the invention may comprise a method for producing high-quality digital dentures in three (3) patient visits to a dental practitioner, the method further comprising:

A first interaction where the dental practitioner takes a final impression of the patient's maxilla and / or mandible, uses a papillometer to acquire anatomical measurements of the patient, and select the tooth mould and color that most closely matches the patient, the results of the first interaction producing a first data set, the first data set being utilized to produce a first digital denture that is milled into a first denture base, a second interaction where the dental practitioner seats the first denture base in the patient, the dental practitioner evaluating the tooth position of the first denture base and making adjustments to create a natural smile, and determines the occlusal vertical dimension and records the centric relation, adjusting as necessary, making an interocclusal record with PVS with the first denture base to produce a second data set, the second data set being used to create the final denture, a third interaction where the dental practitioner seats the final denture in the mouth of the patient. Other embodiments of the invention may be described herein.

### Brief Description of the Drawings.

Fig. 1 shows a front view of a measurement of a patient's incisocervical position of the maxillary central incisor, according to embodiments of the invention;
Fig. 2 shows a bottom view depiction of facial surface of the maxillary central incisors, in this embodiment set 12 mm anterior to the posterior border of the incisive papilla.
Fig. 3 illustrates the same bottom view as in Fig. 2 with an anteroposterior line drawn so it passes through the incisive papilla and the center of the palate.
Fig. 4 depicts a mediolateral line is drawn that is perpendicular to the anteroposterior line and passes through the center of the incisive papilla.
Fig. 5 shows the anteroposterior position of the canine cusp tips located over the perpendicular line.
Fig. 6 shows the alar width measurement used to locate the lateral position of the canine cusp tips along the perpendicular mediolateral line.
Fig.7 illustrates how the averages positions of the central incisors and canines, that an arc of curvature is drawn so to contacts the facial surface of the canines and central incisors. This curved line may serve to estimate the arch curvature and is used to locate the position of the facial surface of the maxillary lateral incisors.
Fig. 8 shows the facial surfaces of the maxillary lateral incisors are located so they contact the arc of curvature in Fig. 7.
Fig 9 shows the maxillary lateral incisors are positioned on the arc of curvature.
Fig. 10 shows a front view of the a papillometer as placed on the anterior alveolar ridge of the patient's maxillary arch centering the incisive papilla upon the indentation of the tool, according to a step of the invention.
Fig. 11 depicts a front view of the step of record the length of the upper lip.
Fig. 12 depicts a similar front view as Fig. 11, highlighting the step of recording the high smile line.
Fig. 13 depicts a front view of the inventive instrument being used to record the max dimension of the ala of a dental patient.
Fig. 14 depicts a front view of the step of recording the interpupillary dimension of a patient.
Fig. 15 depicts a front right perspective view of a scanned existing patient denture.
Figs 16 shows a front left view of how the scanned denture from Fig 15 is used to relate the impression of the upper and lower ridges.
Fig 17 shows the same view from Fig 16, but with the impression highlighted.
Fig 18 illustrates an anatomical measuring device being scanned outside the patient's mouth with an intraoral scanner.
Fig 19 depicts a front perspective view of a milled iteration of upper ridge (right side) and a denture base portion (left side) of a lower ridge representing a try-in tool with teeth being separately presented prior to an initial positioning, according to embodiments of the invention.
Fig. 20 shows a frontal right view of an upper ridge having teeth set in wax, used as part of the try-in tool according to embodiments of the invention.
Fig. 21 shows a front central view of an upper ridge of a try-in tool with the teeth being set in wax, according to embodiments of the invention.
Fig. 22 shows a side view of upper ridge having teeth set in wax but without posterior teeth, used as part of the try-in tool, according to embodiments of the invention.
Fig. 23 shows a front view of the try-in tool being positioned in the patient's mouth for further evaluation, according to embodiments of the invention.

A more complete understanding of the present invention may be derived by referring to the detailed description and claims when considered in connection with the Figures, where like reference numbers refer to similar elements throughout the Figures, and:

### Detailed Description of Exemplary Embodiments of the Invention

The present invention may be described herein in terms of various components. It should be appreciated that such components may be realized by any number of structural materials and components configured to perform the specified functions. For example, the present invention may be practiced in any number of dental contexts and the exemplary embodiments relating to dental anatomical instrument measurement for the selection of denture teeth are merely a few of the exemplary applications for the invention. For example, the principles, features and methods discussed may be applied to any crown and bridge restorative dentistry or dental and/or oral maxillofacial treatment applications or to other medical applications where a multi-functional dental instrument may be helpful.

In a co-pending US Pat Application No 15683453, titled "Dental Measuring Device" which is incorporated by reference, describes a dental instrument that may serve as a multi-functional tool, and relevant to this application, capable of serving as the papillometer discussed in this method to secure the selected measurements described herein for gaining natural patient data.

The present invention may be understood in a first embodiment as a method for producing a final denture for a patient seeking restorative dental prosthesis. The method may comprise a series of visits by the patient to a dental professional or other interactions with dental or laboratory staff, and who helps create prosthetics such as full arch dentures for the patient. The visits may take approximately 30 minutes each by following the protocol described herein, reducing the chair side time typically required for similar restorative processes in the prior art.

### FIRST INTERACTION

In the first visit, the dental practitioner may gather available data from the patient, by utilizing anatomical measurements and digital data derived from patient anatomy. In a first embodiment, the digital data may comprise final impressions of the patient's intra-oral anatomy. In a second embodiment, the dental practitioner may take an intra-oral scan of the patient, focusing primarily upon the ridges of the upper and lower arches but ideally also mapping the vestibular regions of the patient's intra-oral anatomy. In other embodiments, the patient's existing denture or other prosthesis may be utilized for scanning, or other methods known in the arts of acquiring data for existing patient oral anatomy may be utilized. However the patient intra-oral anatomy is captured, scanned, or acquired, the digital data that results may be characterized as a first set of digital data.

With regards to the intra-oral scan, many of the current scanner heads have a small field of view and corned edges, rendering them unable to reliably image the mucosa of the vestibular regions of the intra-oral anatomy, and it is certainly not an objective of most intra-oral scanners to map those regions of the patients, especially with the mandible where the tongue and other obstructions create impediments to such a full scan. In an embodiment of the invention, a probe for an intra-oral scanner head is utilized with the inventive method, the probe having rounded head or having curved aspects thereof. In another embodiment, a wide field of view for the probe of the scanner head is disclosed with this embodiment of the inventive method. A U-shaped retractor may be used to pull back the mucosa tissue to create a moretaut surface for scanning. It is thus counterintuitive to scan the lower arch of a patient for the purpose of creating a try-in denture base in a subsequent visit. With the improvements described herein for the probe for an intra-oral scanner head and retractor, additional gains in the data for the vestibular regions, even in the mucosa lingual to the tongue

Furthermore, scanning mucosa in the vestibular regions is made difficult by the lack of landmarks (compare with scanning arches/tooth portions with ample landmarks).

Looking more closely at the first embodiment, the final impression may be acquired through a number of techniques known in the arts. In an embodiment of the invention, impression trays as described below may be utilized. The impression trays according to the Figures may be advantageous in achieving the objectives in the present invention.

According to an embodiment of the invention depicted in the, impression material may be utilized as understood in the arts for being appropriate for: 1) Standard impression material, 2) Rigid setting impression material for border molding, and 3) Fast setting material for the final impression. Other impression materials may be utilized within the scope of the invention.

The maxillary impression tray may be heated in 160 degree F water for one minute, repeating for the mandibular ridge. The maxillary and mandibular trays may be shaped according to embodiments of the invention by placing the trays in the patient's mouth and shaping them to the patient's palate and alveolar ridge using border molding motions.

The trays may be evaluated and modified, for example by trimming them with a cutting tool or by adding material, or by stretching the tray. Further, the tray may be perforated for use with open implant impressions. After modifications, adhesive may be applied to the tray, with border molding applied to the maxillary and mandibular trays. Relief may be applied to areas of the impression tray that show PVS material by using a carbide bur or other tools know in the arts to remove such material. At this point, final impressions may be made and scanned by methods well-known in the arts for mapping out the complete dimensions of an upper and/or lower arch impression to input into the first set of digital data.

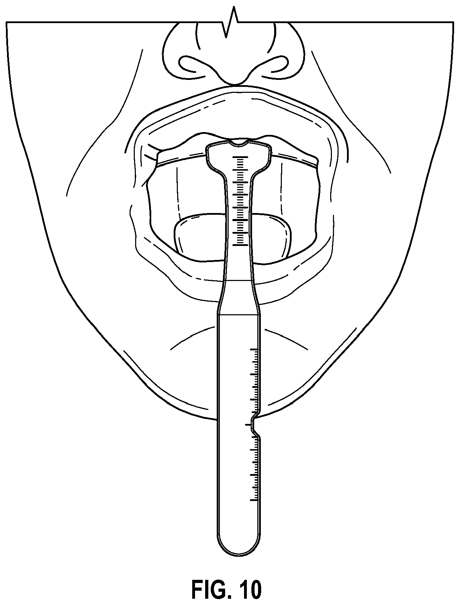

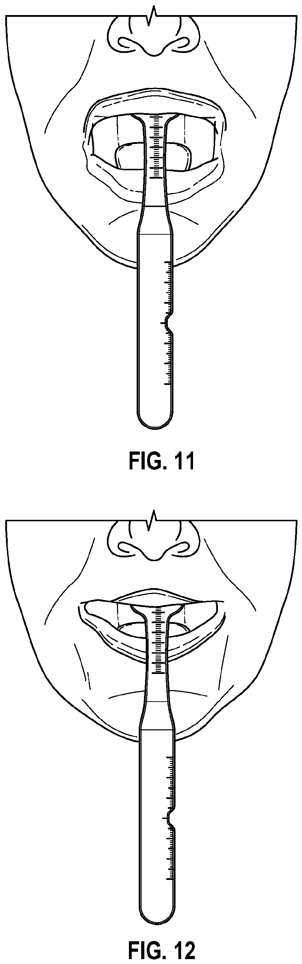

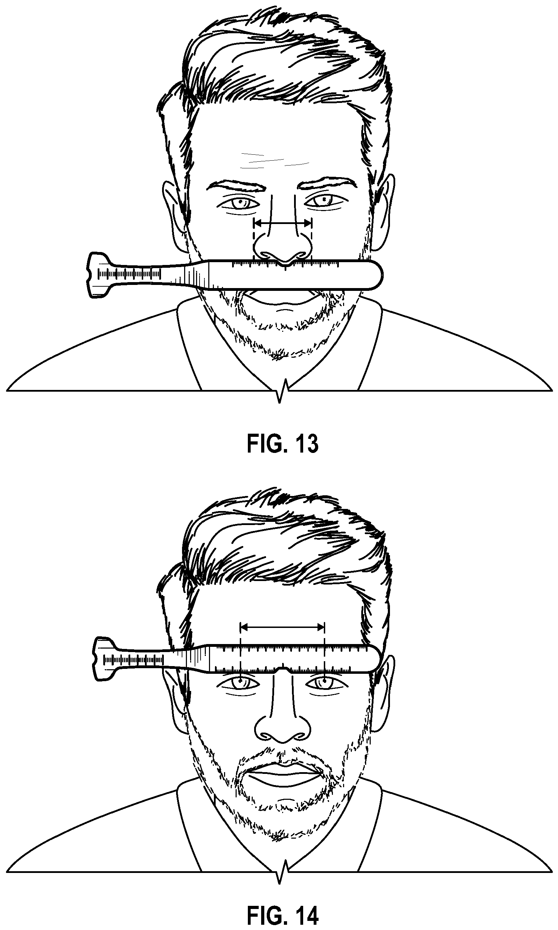

During the first visit, important anatomical landmarks may be noted and measured according to preferred embodiments of the invention shown in the Figs 10-14, using a papillometer as shown and as described more fully in the above-noted co-pending utility application noted above and in the Figures to take important anatomical measurements. In one embodiment of the invention, three anatomical measurements are taken from the patient's maxillary record in the first interaction: a center of incisive papilla, and a posterior border of incisive papilla, and center of palate, as these three points may be used to create the anteroposterior plane for use in the construction of a try-in tool utilized in the second interaction. Looking further at another embodiment depicted in Figures 10-14, a dental measuring instrument may be utilized for taking a select group of measurements for creating a digital denture and later, fabricating dental prostheses in a minimal number of patient interactions. Fig. 10 shows a front view of the measuring instrument as placed on the anterior alveolar ridge of the patient's maxillary arch centering the incisive papilla upon the indentation of the tool. Fig. 11 depicts a front view of the instrument being utilized to record the length of the upper lip. Fig. 12 depicts a similar front view as Fig. 11, but with the instrument recording the high smile line. Fig. 13 depicts a front view of the inventive instrument being used to record the max dimension of the ala of a dental patient. Fig. 14 depicts a front view of the instrument being utilized to record the interpupillary dimension of a patient.

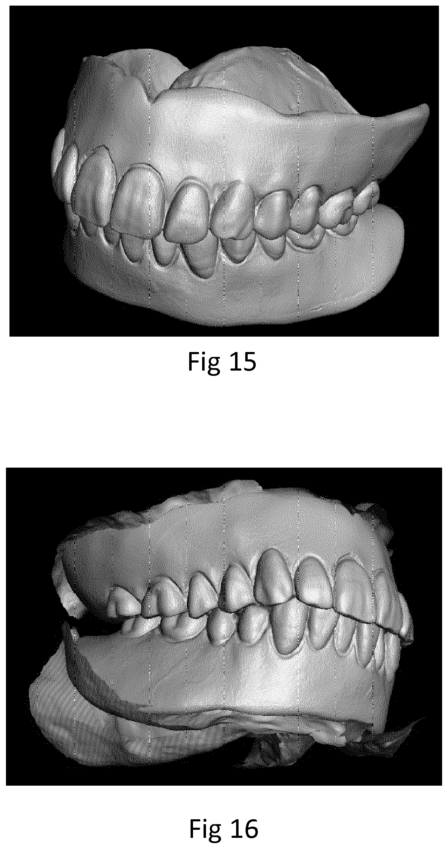

In an embodiment of the invention, an existing patient denture may be utilized for capturing patient data during the first interaction. In the event that if the patients existing denture is adequate or only required minimal adjustments with regards to occlusal plane and tooth positions it may be relined with an impression material (Polyvinyl Siloxane (PVS) for example) and presented for capturing a record of how the upper and lower dentures fit together (an interocclusal record). The upper and lower dentures may then be removed from the mouth and repositioned according to the interocclusal record and scanned using an intraoral scanner outside the mouth. The intra oral scan may capture the position of the teeth and the tissue bearing surfaces (intaglio surface) of the upper and lower denture. This scan will allow an orientation of the upper and lower edentulous ridge impressions either made with an intraoral scanner or an impression to be recorded. An example of what the scan of the relined dentures is shown in Fig 15. Further illustrated in Figures 16-17 is how denture is used to relate the impression of the upper and lower ridges.

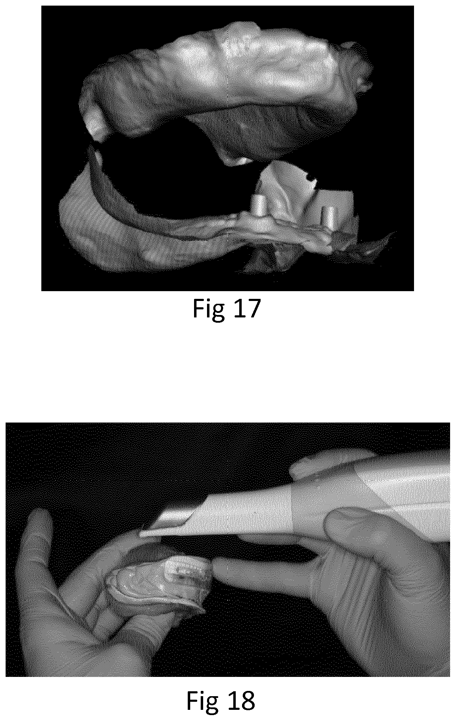

In another embodiment of the invention, if the patients existing denture is not adequate or he or she does not have a preexisting denture, during the first appointment the an anatomical measuring device can be used to easily record the relationship of the upper and lower arches and create an inter-arch record that can be used to determine the orientation of the upper and lower edentulous ridges. The anatomical measuring device may then be scanned outside the mouth with an intraoral scanner, as shown in Figure 18.

In an embodiment of the invention during the first visit, tooth attributes such as the tooth mold, size and color may be selected to best fit the patient's existing teeth or those fitting a profile determined by the dentist and utilizing patient input, resulting in a tooth input(s).

The resulting data from the tooth inputs, anatomical measurements, and by the first set of digital data, a digital model of the try-in tool may be created. The digital model may be printed or milled into a provisional or try-in denture base that may be affixed with teeth set in wax.

According to an embodiment of the invention, the following rules may be utilized for creating the try-in tool and for positioning the teeth upon an upper and/or lower arch of the try-in tool. After the scanning the patients' ridge (intra oral scan) or clinical impression the bite reference is created. In a digital denture design software program or other mapping template, the following steps may be followed: Initially, anatomical landmarks may be established on the maxillary record; center of incisive papilla, posterior border of incisive papilla, and center of palate, these three points create the anteroposterior plane. The anteroposterior plane may intersect with the center of the incisive papilla and may be perpendicular to the anteroposterior plane, creating a resulting mediolateral plane. Using the interalar measurement (such as the clinical record) and the mediolateral plane and two canine landmarks may be utilized for referencing the positioning of the canine cusp tips.

The midline and incisal edge landmark may be created using the anteroposterior plane, lip line at rest + tooth exposure (a clinical measurement), and the anatomical average distance from the posterior boarder of the incisive papilla (12mm). An arch feature may then be created following the canine and midline/incisal edge landmarks to be used as a guide to set the anterior teeth.

Mediolateral orientation of the maxillary arch (the horizontal plane) may be made parallel by a reference line connecting the right and left pterygomaxillary notches that aligns parallel to the XY plane in a patient coordinate system utilized in the design software.

Occlusal plane reference may then be created based on the position of the incisal edge of maxillary central incisors and decreases posteriorly to a point about 10 mm inferior to the depths of the pterygomaxillary notches.

Three reference points may be created on the mandibular arch; left retromolar pad, right retromolar pad, and the midline/incisal edge. A reference plane may then be created intersecting all three points. The mandibular occlusal plane may then be set coplanar with the maxillary occlusal plane.

The mandibular arch is positioned using both midline/incisal edge reference points from the maxillary and mandibular arch. The mandibular midline/incisal edge reference point is positioned to the maxillary midline/incisal edge reference point 1mm superior and 1mm posterior.

With the above references created and mapped, the resulting planning data may be converted to an initial digital denture design for a provisional denture or try-in tool, knowing the location of the centrals, the canines, and mandibular anterior position. In one embodiment, the planning data may be created in one software and imported into a different software for creating the initial digital denture. In other embodiments, the same tasks may be accomplished within one software program across one computing system or a number of platforms attended to by one or more technicians.

In an embodiment of the invention, the planning data with its correlated try-in tool and the tooth data and may be utilized to create a setup for the initial digital denture having teeth positioned according the rules described herein. The maxillary centrals and canines may be set to landmarks in the reference and the rest of the anterior teeth may sequentially follow the arch reference. The mandibular anterior teeth may be set to the mandibular midline/incisal edge reference creating the standard 1.0 mm of vertical overlap (overbite) and 1.0 mm of horizontal overlap (overjet). Other ranges for the overlaps may be utilized for variations in patient anatomy or as needed. These rules may be altered or appear in other orders of sequence in embodiments of the invention. Furthermore, the rules may be understood further and developed according the following rules for tooth positioning, which identifies certain guidelines for tooth positioning, such rules which may be utilized in a digital planning software on a computing system.

### TOOTH POSITIONING GUIDELINES

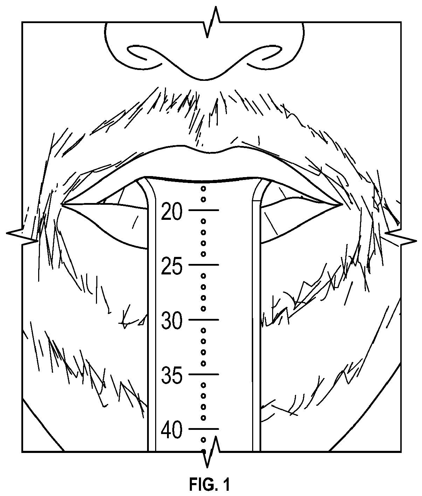

Looking at Fig. 1, the incisocervical position of the maxillary central incisor may be determined by making a clinical measurement of the vertical distance between the incisive papilla and the lip at rest. Based on this measurement, the clinician may add, note or input the desired number of millimeters to reflect how much of the incisal edge would be visible at rest. The average number of millimeters of maxillary central incisor exposure with the lips parted is about 2.0 mm for males and 3.5 mm for females, so the measurement may be expressed as a delta from a preset average, may be simply expressed as a sum value, or other mathematical expression.

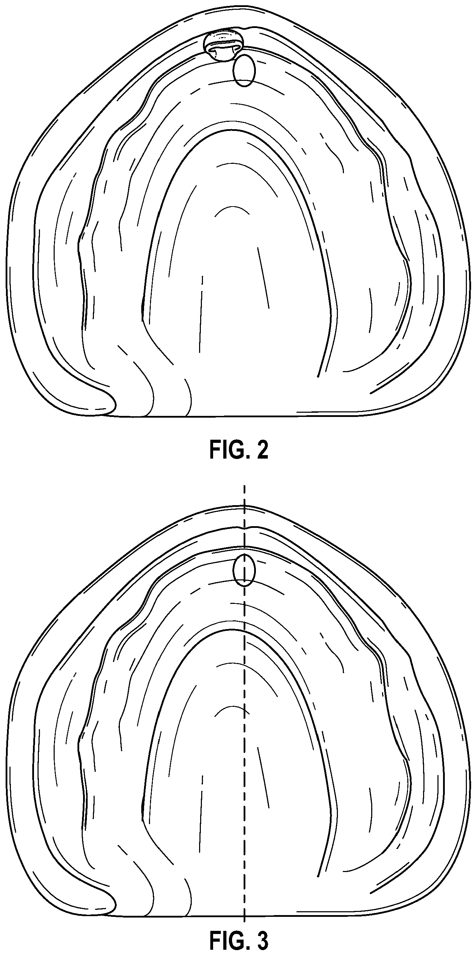

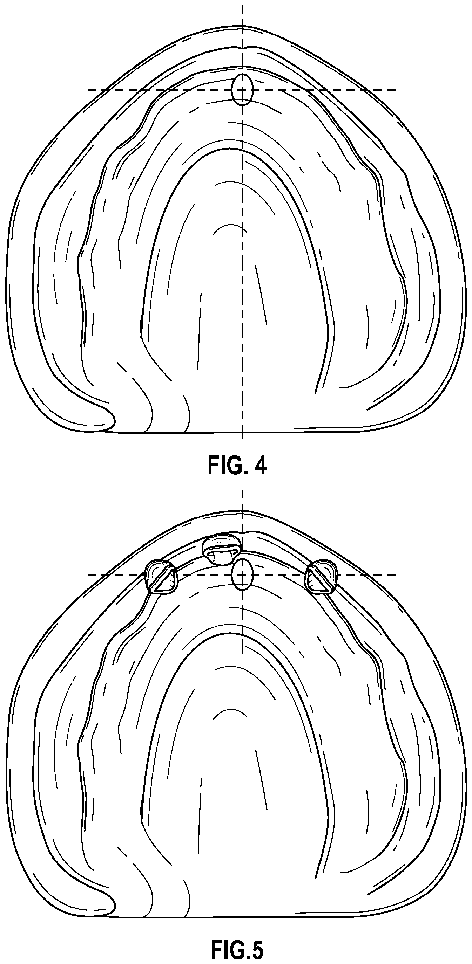

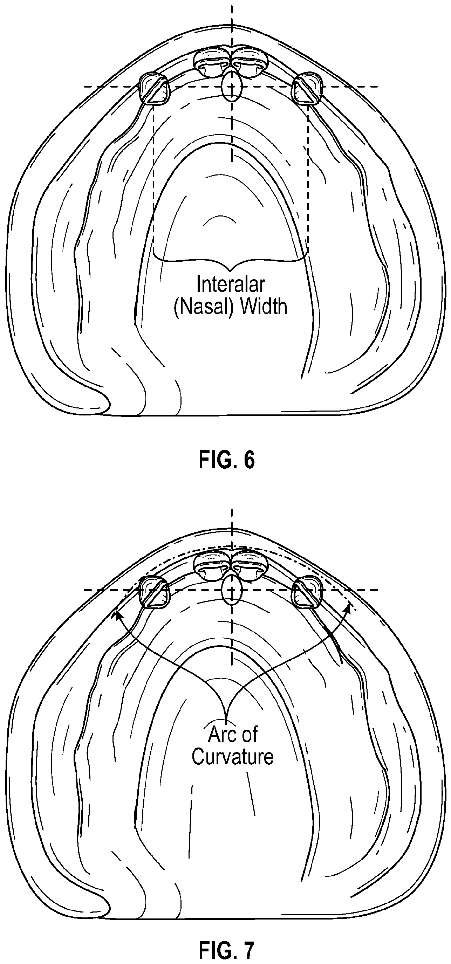

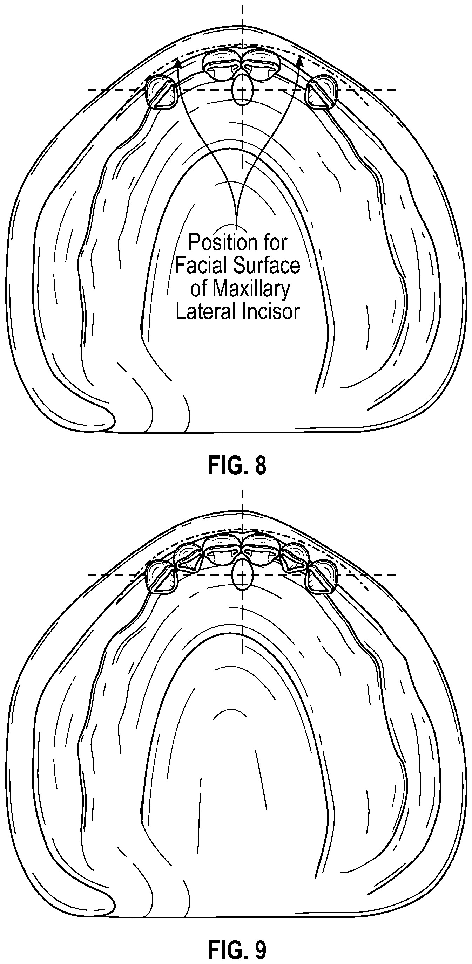

Moving to Fig. 2 (as well as Figs. 3-9), a work space mockup of the patient's upper jaw and palate is utilized to create a sequence of inputted natural patient measurements to determine the strategic positioning of teeth through mathematic calculations. The facial surface of the maxillary central incisors may be set approximately 12 mm anterior to the posterior border of the incisive papilla. Fig. 3 illustrates that an anteroposterior line may be drawn so it passes through the incisive papilla and the center of the palate. In Fig. 4, a mediolateral line may be drawn that is approximately perpendicular to the anteroposterior line and may pass through the center of the incisive papilla. Fig. 5 depicts the anteroposterior position of the canine cusp tips is located over the perpendicular line. Fig. 6 illustrates how alar width measurement may be used to locate the lateral position of the canine cusp tips along the perpendicular mediolateral line. Fig. 7 shows how based on these average positions of the central incisors and canines, an arc of curvature (curved line) is drawn so it may contact the facial surface of the canines and central incisors. The curved line may serve to estimate the arch curvature and is locate the position of the facial surface of the maxillary lateral incisors. Fig. 8 shows where facial surfaces of the maxillary lateral incisors are located so they may contact the arc of curvature. Fig. 9 illustrates how the maxillary lateral incisors are positioned on the arc of curvature. From this step in the process, the mediolateral orientation of the anterior teeth (the horizontal plane) may be made parallel to a line connecting the right and left pterygomaxillary notches. Further, the anteroposterior orientation of the maxillary occlusal plane may be based on the position of the incisal edge of maxillary central incisors and decreases posteriorly to a point about 10 mm inferior to the depths of the pterygomaxillary notches. Even further, the labial surface of the occlusal third of the maxillary central incisors may be positioned approximately perpendicular to the maxillary occlusal plane. The incisal edge of the mandibular central incisor may be positioned such that there is approximately 1.0 mm of vertical overlap (overbite) and 1.0 mm of horizontal overlap (overjet) by the maxillary central incisor. The anteroposterior orientation of the mandibular occlusal plane may extend from the incisal edge of the mandibular incisors to the center of the retromolar pads.

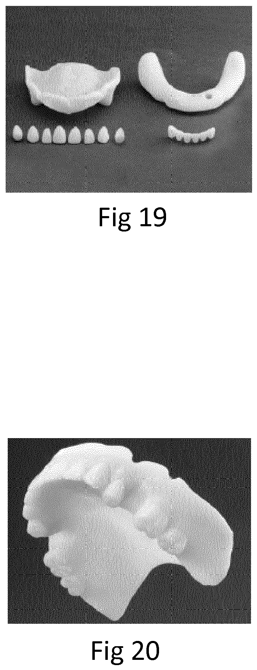

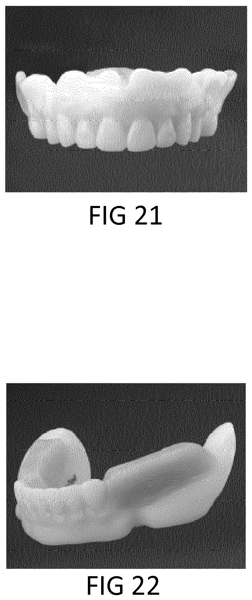

After the initial digital denture has been finalized accordingly, a try-in tool may be produced (milled, printed, or by other means known in the arts to manufacture prosthetic teeth sets such as dentures). In an embodiment of the invention shown in Fig 19, a base without the teeth is utilized, with the teeth being suspended in a wax matrix and affixed to the base. In other embodiments, the base may be produced without the teeth, or with teeth which are then cut away. As illustrated in Figs 20-22, the doctor may then move the teeth in the second interaction by heating the wax matrix before taking final records and impressions. Other embodiments of the invention are available in which teeth are positioned on the try-in tool or denture base in a manner that allows adjustment.

In an embodiment of the invention, teeth may comprise a façade on the facial side of the teeth that an accurate representation of the patient's digital denture, but with the lingual face of the teeth being at least partially without its full anatomical profile. In this embodiment, the teeth may be functional insofar as the functional responsibility of occlusion, positioning, and other data input activities as described below in the Second Interaction. By removing lingual portions of the teeth, for example, to the extent that they are hollow behind a façade, the teeth become easier to manually maneuver around in the wax settings of the upper and lower ridges of the try-in tool.

### SECOND INTERACTION

In an embodiment of the invention, a patient may undergo a second interaction to acquire digital denture data. The try-in denture base may be seated in the mouth of the patient, adjusting the bases if necessary. The orientation of the horizontal occlusal plane and midline may be checked and adjusted as well, if necessary.

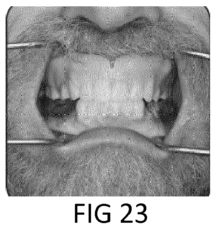

As shown in Fig 23, tooth position may be evaluated, in embodiments of the invention, namely the length and position of the central incisors, and adjustments may be made to those areas, along with moving the anterior teeth to create a more natural smile. The occlusal vertical dimension and centric relation may be determined, adjusted, and recorded. The lower anterior teeth may be moved into proper position as well, in preferred embodiments.

Finally, an interocclusal record may be taken with PVS between the upper and lower portions of the try-in for further processing and scanning. Such data may be utilized to update the digital denture model, which may then be used to create a final denture through printing, milling, or other manufacturing methods known in the arts to create dentures. After the provisional denture or try-in tool has been finalized with regards to tooth positioning, it may be scanned at the dentist office or at the lab. According to various embodiments of the invention, the following scans may be utilized; maxillary and mandibular arches in bite relationship, maxillary tissue and teeth, and mandibular tissue and teeth.

In the circumstance of the second embodiment of the invention that utilizes the intra-oral scan at the first interaction, an impression of the patient with the try-in tool may be taken to supplement information that may be missing or imprecise at the vestibular regions of the intra-oral patient anatomy that inform the creation of the flange, base and border moulding of the final denture. The impression may be accomplished by utilizing re-lining the try-in tool as an impression tray, or may be accomplished by other techniques that include the finalized tooth positioning.

The new records and inputs of the second patient interaction are then processed and compiled, creating a second set of digital data, and follow the standard procedure for digital cleanup using the new scan data to create the final prosthesis setup reference, utilizing the second set of digital data for occlusal relationship and tooth position to create a final digital denture.

In an embodiment of the invention, the first set of digital data or the initial digital denture may also be utilized in the design of the final digital denture. In another embodiment, the second set digital data is solely used in creating the final digital denture.

### THIRD INTERACTION

On the third visit to the dental practitioner, the final denture may be seated in the patient's mouth using traditional seating techniques understood in the arts of prosthetic dentistry.

Benefits, other advantages, and solutions to problems have been described herein with regard to specific embodiments. However, the benefits, advantages, solutions to problems, and any element(s) that may cause any benefit, advantage, or solution to occur or become more pronounced are not to be construed as critical, required, or essential features or elements of any or all the claims or the invention. The scope of the present invention is accordingly to be limited by nothing other than the appended claims, in which reference to an element in the singular is not intended to mean "one and only one" unless explicitly so stated, but rather "one or more." All structural, chemical, and functional equivalents to the elements of the above-described exemplary embodiments that are known to those of ordinary skill in the art are expressly incorporated herein by reference and are intended to be encompassed by the present claims.

## Claims

1. A method for producing a customized, digitally-designed prosthesis in three (3) patient interactions, the method comprising:
a first patient interaction including the optional tasks of acquiring a patient's intra-oral anatomy, natural anatomical measurements of the patient, and tooth data of the patient, the results of the first patient interaction producing a first data set;
utilizing the the first data set to design a first digital prosthesis, the first digital prosthesis being manufactured into a first denture base and obtaining artificial teeth;
a second patient interaction including the optional tasks of seating the first denture base in the patient, adjusting the positioning of the artificial teeth to the first denture base, making an interocclusal record with the first denture base, the results of the second patient interaction creating a second data set;
utilizing the second data set to create a final digital denture, the final digital prosthesis being manufactured into a final dental prosthesis;
a third interaction where the dental practitioner seats the final prosthesis in the mouth of the patient.

2. The method in claim 1, whereby the step of the first patient interaction further comprises the optional task of taking a full impression of the patient's intra-oral anatomy.

3. The method in claim 1 or 2, whereby the step of the first interaction includes the optional task of scanning the patient's pre-existing denture.

4. The method according to any one of the preceding claims, the second patient interaction further including the steps of determining the occlusal vertical dimension and recording the centric relation.

5. The method according to any one of the preceding claims, the step of utilizing the first data set of the first patient interaction further including mathematically determining the location of central incisor teeth, the canine teeth, and mandibular anterior teeth.

6. The method according to any one of the preceding claims, the step of utilizing the first data set of the first patient interaction further including determining the location of central incisor teeth, the canine teeth, and mandibular anterior teeth by using the natural anatomical measurements of the patient.

7. The method according to any one of the preceding claims, including a step of acquiring three natural anatomical landmarks during the first interaction, wherein the step of acquiring three natural anatomical landmarks comprises taking a maxillary record of a center of incisive papilla, a posterior border of incisive papilla, and a center of palate.

8. The method of Claim 7, whereby the step of utilizing the first data set to create the first digital prosthesis includes, using the three natural anatomical landmarks to create a anteroposterior plane.

9. The method according to claim 7 or 8, whereby the step of utilizing the first data set to create the first digital prosthesis may comprise a set of rules for positioning teeth on the try-in tool, the rules including:
determining an incisocervical position of the maxillary central incisor;
setting the facial surface of the maxillary central incisors approximately 12 mm anterior to the posterior border of the incisive papilla;
using the three natural anatomical landmarks to create an anteroposterior plane;
identifying a mediolateral plane from the intersection of the anteroposterior plane and the center of the incisive papilla;
identifying the anteroposterior position of the canine cusp tips located over the mediolateral line;
locating a lateral position of the canine cusp tips along the perpendicular mediolateral line using an alar width measurement;
connecting the facial surface of the canine cusp tips and the central incisors with an arc of curvature to estimate the arch curvature and locate the position of the facial surface of the maxillary lateral incisor;
locate the facial surfaces of the maxillary lateral incisors so they are proximal to the arc of curvature; and
position the maxillary lateral incisors on the arc of curvature, whereby the initial data may be converted to the first digital prosthesis denture design.

10. The method of Claim 9, the rules for positioning teeth further comprising the steps of:
creating a mediolateral orientation of anterior teeth so that they are parallel to a line connecting right left pterygomaxillary notches;
basing an anteroposterior orientation of the maxillary occlusal plane on a position of an incisal edge of the maxillary central incisors so that the plane decreases posteriorly to a point about 10 mm inferior to the depths of the pterygomaxillary notches;
positioning a labial surface of an occlusal third of the maxillary central incisors to be approximately perpendicular to the maxillary occlusal plane;
positioning an incisal edge of the mandibular central incisor so there is approximately 1.0 mm of vertical overbite overlap and 1.0 mm of horizontal overjet overlap by the maxillary central incisor;
extending the anteroposterior orientation of the mandibular occlusal plane from the incisal edge of the mandibular incisors to a center of the retromolar pads, whereby the initial data may be converted to the first digital prosthesis denture design.

11. The method of Claim 9 or 10, whereby the step of utilizing the first data set to create the first digital prosthesis may be created on a computer software program on a computer system.

12. The method according to any one of the preceding claims, the final prosthesis being an upper and lower arch full denture.

13. The method according to any one of the preceding claims, whereby the results of the second patient interaction include a vertical bite, interocclusal record or an impression of the try-in tool that is utilized for the second data set.

14. The method according to any one of the preceding claims, the artificial teeth in the second patient interaction having a façade side and a lingual side, the façade side comprising an accurate representation of digital teeth in the first digital denture, the lingual side having less than fully bodies of the teeth.

15. The method according to any one of the preceding claims, the optional step adjusting the positioning of the artificial teeth to the first denture base in the second patient interaction comprising setting the artificial teeth in a moldable material against the denture base.

16. The method according to any one of the preceding claims, the step of acquiring a patient's intra-oral anatomy comprising of the following optional sources: a pre-existing patient denture; an intra-oral scan of at least a portion of the patient's intra-oral anatomy, a digital image of an anatomical measure device affixed to an impression of the patient's intra-oral anatomy, and a digital image of an impression of a patient's intra-oral anatomy.
